# EUROPÄISCHE PATENTSCHRIFT

(11) **EP 1 687 177 B1**
(45) Veröffentlichungstag und Bekanntmachung des Hinweises auf die Patenterteilung: **20.07.2011**
(21) Anmeldenummer: 04790080.8
(22) Anmeldetag: 01.10.2004
(51) Int. Cl.: B60N 2/30, B60N 2/42, B60N 2/70

(54) **FAHRZEUGSITZ, INSBESONDERE FÜR EIN KRAFTFAHRZEUG**
VEHICLE SEAT, ESPECIALLY FOR A MOTOR VEHICLE
SIEGE DESTINE A UN VEHICULE, NOTAMMENT UN VEHICULE AUTOMOBILE

(30) Priorität: 19.11.2003 DE 10354065
(43) Veröffentlichungstag der Anmeldung: 09.08.2006
(73) Patentinhaber: Johnson Controls GmbH, 51399 Burscheid (DE)
(72) Erfinder: STARK, Andreas, 42653 Solingen (DE); SPRENGER, Erik, 42897 Remscheid (DE); WEISS, Andreas, 38440 Wolfsburg (DE)
(74) Vertreter: Hemmelmann, Klaus
(86) Internationale Anmeldenummer: PCT/EP2004/010970
(87) Internationale Veröffentlichungsnummer: WO 2005/049368

(56) Entgegenhaltungen:
- EP-A- 0 985 575
- DE-A- 19 933 423
- DE-C- 19 962 424
- US-A- 2 956 837
- US-A- 3 807 790
- US-A- 5 882 073
- PATENT ABSTRACTS OF JAPAN Bd. 1997, Nr. 04, 30. April 1997 (1997-04-30) -& JP 08 318769 A (NISSAN MOTOR CO LTD), 3. Dezember 1996 (1996-12-03)

## Beschreibung

Die Erfindung betrifft einen Fahrzeugsitz, insbesondere für ein Kraftfahrzeug, mit einem Sitzteil aus einem Hartschaumteil und einer Weichschaumauflage.

### Stand der Technik

Ein gattungsgemäßer Fahrzeugsitz mit einem entsprechenden Sitzteil ist aus der US 5 882 073 A bekannt. Weiterhin sind grundsätzliche Sitzteilgeometrien aus der JP 8-318 769 A (siehe Figur 1) und der US 2 956 837 A (siehe Figur 1) bekannt.

Ein anderer Fahrzeugsitz ist aus der Patentanmeldung DE 198 45 730 A1 bekannt, wobei das Polsterteil als Rückenlehne ausgebildet ist, die einen Sandwichaufbau aus einem Formschaumteil aus EPP, einem Weichpolster und einer dazwischen befindlichen Formschale aus Leichtmetall aufweist. Rückseitig ist das Formschaumteil durch ein Rückwandelement abgedeckt.

Ein derartiges Polsterteil ist grundsätzlich dazu geeignet, das Gewicht des Fahrzeugs gegenüber Sitzen mit konventionellen Stahlstrukturen zu reduzieren. Allerdings ist der gewählte Aufbau nur für den Einsatz bei Rückenlehnen geeignet und darüber hinaus wegen der verwendeten Metallformschale immer noch relativ schwer.

### Aufgabe

Der Erfindung liegt die Aufgabe zugrunde, einen nochmals gewichtsreduzierten, einfach zu fertigenden Fahrzeugsitz bereitzustellen.

### Lösung

Die Aufgabe wird erfindungsgemäß dadurch gelöst, dass das Polsterteil des gattungsgemäßen Fahrzeugsitzes als Sitzteil ausgebildet ist und das Hartschaumteil eine zumindest bereichsweise kongruent zum Fahrzeugboden geformte Oberfläche aufweist, die mit dem Fahrzeugboden in Gebrauchsstellung des Sitzteils in Formschluß bringbar ist, wobei das Sitzteil mittels eines Gelenkmechanismusses aus dem Formschluss lösbar und in eine Nichtgebrauchsstellung verlagerbar ist, das Gewicht des Sitzinsassen durch den Formschluss unmittelbar vom Hartschaumteil in den Fahrzeugboden übertragen wird und der Gelenkmechanismus nur der Bewegungsführung des Sitzteils dient.

Durch diese Ausbildung kann auf einen massiven, das Gewicht des Fahrzeuginsassen insbesondere im Crashfall in die Fahrzeugstruktur ableitenden Gelenkmechanismus für das Sitzteil verzichtet werden. Es ist daher möglich, den Gelenkmechanismus direkt, also unter Verzicht auf eine im Sitzteil angeordnete metallische Stützstruktur, im Hartschaumteil zu verankern.

Das Hartschaumteil besteht vorzugsweise aus expandiertem Polypropylen-Partikelschaum (EPP), aus dem sich kostengünstig komplexe dreidimensionale Formteile geringen Gewichts herstellen lassen.

Der Formschluss ist mit Vorteil zwischen einer sich im Wesentlichen quer zur Fahrrichtung vertikal erstreckenden Oberfläche des Fahrzeugbodens und einer dazu parallel verlaufenden Oberfläche des Hartschaumteils erzeugbar, wobei die Oberfläche des Fahrzeugbodens bevorzugt Teil einer horizontal und quer zur Fahrtrichtung (Y-Richtung) verlaufenden, trägerartigen Aufwölbung des Fahrzeugbodens und die Oberfläche des Hartschaumteils Teil einer in gleicher Richtung verlaufenden ersten Ausnehmung im Hartschaumteil ist.

Nach einer besonderen Ausbildung der Erfindung umfaßt der Gelenkmechanismus einen Gelenkarm, der an einem Ende gelenkig mit dem Fahrzeugboden und an seinem anderen Ende gelenkig mit dem Hartschaumteil derart verbunden ist, dass das Sitzteil aus seiner Gebrauchsstellung in eine parallelverlagerte Nichtgebrauchsstellung bringbar ist. Das Sitzteil wird somit nicht von seiner Gebrauchsstellung in die Nichtgebrauchsstellung geklappt, sondern wendet dem Fahrzeugboden stets die gleiche Flächenseite zu. Dabei weisen beide Gelenke vorzugsweise sich in Y-Richtung erstreckende Drehachsen auf, wobei das dem Hartschaumteil zugeordnete Gelenk in Gebrauchsstellung des Sitzteils gegenüber dem dem Fahrzeugboden zugeordneten Gelenk entgegen der Fahrtrichtung (X-Richtung) nach hinten versetzt ist.

Zur Vereinfachung der Erstmontage, aber auch einer Fixierung des Sitzteils nach einer vorübergehenden Entnahme, kann vorgesehen werden, dass das dem Hartschaumteil zugeordnete Gelenk in diesem bei der Montage des Sitzteils verrastbar ist.

Um die Lage des Sitzteils auch in Nichtgebrauchsstellung abzusichern, ist das Sitzteil in Nichtgebrauchsstellung bevorzugt mittels einer zweiten Ausnehmung im Hartschaumteil mit der Aufwölbung des Fahrzeugbodens in Formschluss bringbar. Die erste und zweite Ausnehmung können dabei naturgemäß weitgehend übereinstimmende, zueinander parallel versetzte Konturen aufweisen.

Um im Crashfall ein Durchrutschen des Sitzinsassen unten dem Beckengurt zu verhindern, ist die Oberseite des Hartschaumteils vorzugsweise nach hinten abfallend rampenförmig ausgebildet ist. Dabei ist eine zwischen der Oberfläche der ersten Ausnehmung und dem Sitzbeinhöcker des Sitzinsassen verlaufende virtuelle Gerade mit Vorteil um einen Winkel von 25° bis 35°, bevorzugt etwa 30° gegenüber der Horizontalen geneigt, um die vom Gewicht des Sitzinsassen im Crashfall verursachten Trägheitskräfte optimal in die Struktur des Fahrzeugbodens abzuleiten.

Um das Überführen eines bevorzugt wie zuvor beschrieben ausgeführten Fahrzeugsitzes besonders komfortabel zu gestalten, kann vorgesehen werden, dass das Sitzteil mit einer schwenkbar gelagerten Rückenlehne des Fahrzeugsitzes derart in Wirkzusammenhang steht, dass das Sitzteil beim Vorklappen der Rückenlehne aus der aufrechten Gebrauchsstellung in eine Nichtgebrauchsstellung seinerseits von der Gebrauchs- in die Nichtgebrauchsstellung verlagert wird.

Dies wird vorzugsweise dadurch bewirkt, dass die Rückenlehne drehbar mit einem versetzt zu ihrer Schwenkachse angeordneten Übertragungsgestänge verbunden ist. Dabei kann das Übertragungsgestänge an seinem dem Gelenkarm zugeordnetem Ende mit einer zahnstangenartigen Verzahnung ausgestattet werden, die in Verbindung mit einer am Gelenkarm ausgeformten, zirkulären Gegenverzahnung zur Erzeugung eines Drehmoments um eines seiner Gelenke geeignet ist. Aus Platzgründen ist die Gegenverzahnung mit Vorteil im Bereich des dem Fahrzeugboden zugeordneten Gelenks des Gelenkarms ausgebildet.

### Figuren

Die Figuren stellen beispielhaft und schematisch eine Ausführung der Erfindung dar.

Es zeigen:
- Fig. 1: einen erfindungsgemäß ausgebildeten Fahrzeugsitz in Gebrauchsstellung,
- Fig. 1a: eine entfeinerte Darstellung des Sitzteils nach Fig. 1,
- Fig. 2 und 3: den Fahrzeugsitz nach Fig. 1 in Zwischenstellungen und
- Fig. 4: den gleichen Fahrzeugsitz in seiner Nichtgebrauchsstellung.

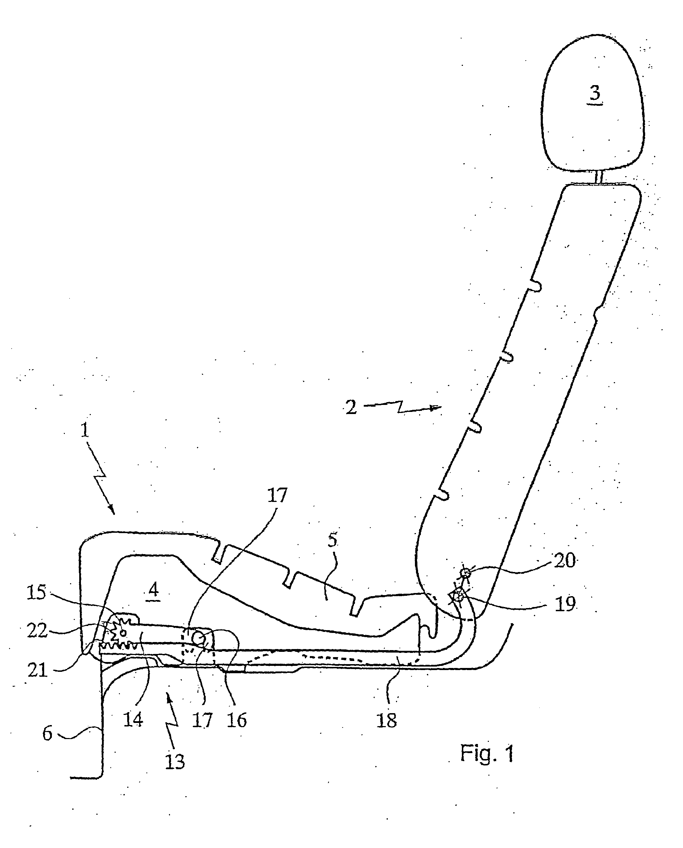

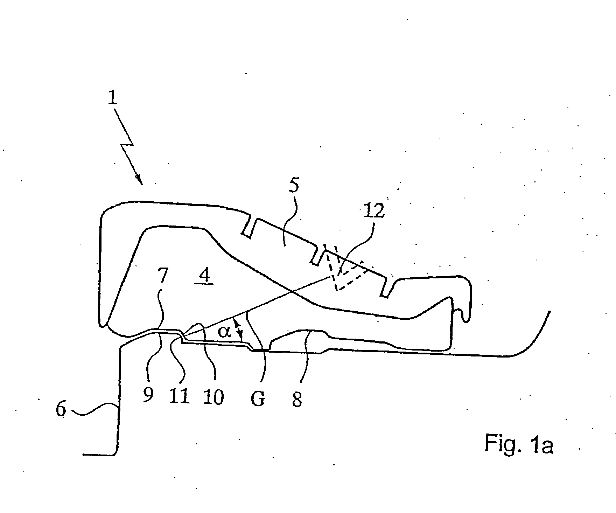

Der in Fig. 1 dargestellte Fahrzeugsitz besteht aus einem Sitzteil 1 und einer Rückenlehne 2, die mit einer Kopfstütze 3 versehen ist. Das Sitzteil 1 besteht aus einem oberseitig rampenförmig abfallenden Hartschaumteil 4 aus EPP, das auf seiner dem Sitzinsassen zugewandten Seite mit einer Weichschaumauflage 5 aus einem Polyurethanschaum versehen ist. Diese wird letztlich mit einem nicht dargestellten Bezug aus Textil oder Leder abgedeckt.

Wie aus Fig. 1a ersichtlich, ist die auf dem Fahrzeugboden 6 aufliegende Unterseite des Hartschaumteils 4 mit in Fahrtrichtung zueinander beabstandeten, im Wesentlichen konturgleichen Ausnehmungen 7, 8 versehen, von denen die vordere Ausnehmung 7 eine trägerartige Vorwölbung 9 im Fahrzeugboden 6 formschlüssig umgreift. Dabei liegt zumindest eine von einer näherungsweise vertikalen Achse und einer quer zur Fahrtrichtung verlaufenden Achse aufgespannte Oberfläche 10 der Ausnehmung 7 an einer parallel verlaufenden Oberfläche 11 des Fahrzeugbodens 6 derart an, dass in Fahrtrichtung -X auf das Sitzteil 1 wirkende Schubkräfte in den Fahrzeugboden abgeleitet werden. Selbstverständlich kann zusätzlich auch eine formschlüssige Übertragung von Fliehkräften durch die Ausbildung weiterer, entsprechend gedrehter Oberflächen vorgesehen werden. Gleichfalls ist denkbar, das Sitzteil auf aus dem Fahrzeugboden aufragende Zapfen aufzusetzen. Wesentlich für die Durchführung der Erfindung ist das Vorhandensein von Oberflächenstrukturen an Fahrzeugboden 6 und Sitzteil 1, die zur Übertragung entsprechender Schubkräften durch Oberflächenkontakt geeignet sind.

Um ein Kippen des Sitzteils 1 im Crashfall zu vermeiden, verläuft die gedachte Gerade G zwischen der Mitte des Kontaktbereichs der Oberfläche 10 und dem in die Weichschaumauflage 5 eingesunkenen Sitzbeinhöcker 12 gegenüber der Horizontalen unter einem Winkel α von etwa 30°. Die Oberfläche 10 ist orthogonal zur Geraden G ausgerichtet, ist gegenüber der Waagerechten daher um 60° geneigt und verläuft somit im Wesentlichen vertikal.

Ein dennoch auftretendes Drehmoment um den Kontaktbereich der Oberflächen 10, 11 aufzufangen, ist der hintere Bereich des Sitzteils 1 unter die Rückenlehne 2 geschoben und wird beim Überführen in die Nichtgebrauchsstellung aus dieser Sicherung herausgezogen (siehe Fig. 1). Der dazu verwendete Gelenkmechanismus 13 besteht aus einem in Gebrauchsstellung des Sitzteils horizontal ausgerichteten Gelenkarm 14, der über ein erstes Gelenk 15 mit dem Fahrzeugboden 6 und über ein zweites Gelenk 16 mit dem Hartschaumteil 4 des Sitzteils 1 drehbar verbunden ist. Das Gelenk 16 ist zum Einsetzen des Sitzteils bei am Fahrzeugboden 6 montiertem Gelenkarm 14 in eine Clipverbindung 17 des Hartschaumteils 4 einrastbar. Die Clipverbindung 17 ist unmittelbar im Hartschaumteil 4 verschraubt. Da der Gelenkmechanismus 13 nur das geringe Eigengewicht des Sitzteils 1 beim Verlagern in die Nichtgebrauchsstellung auffangen muß, kann auf hochfeste Einlagen im Sitzteil 1 verzichtet werden.

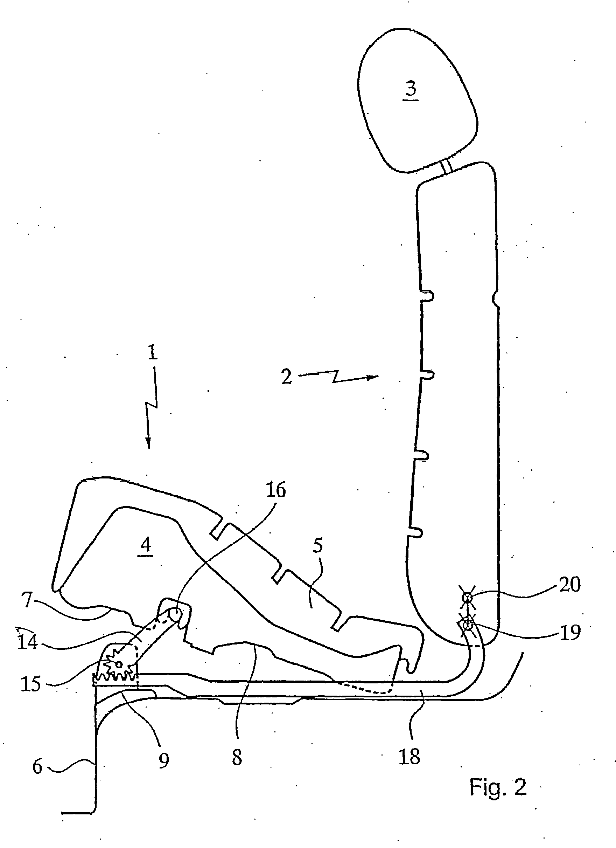

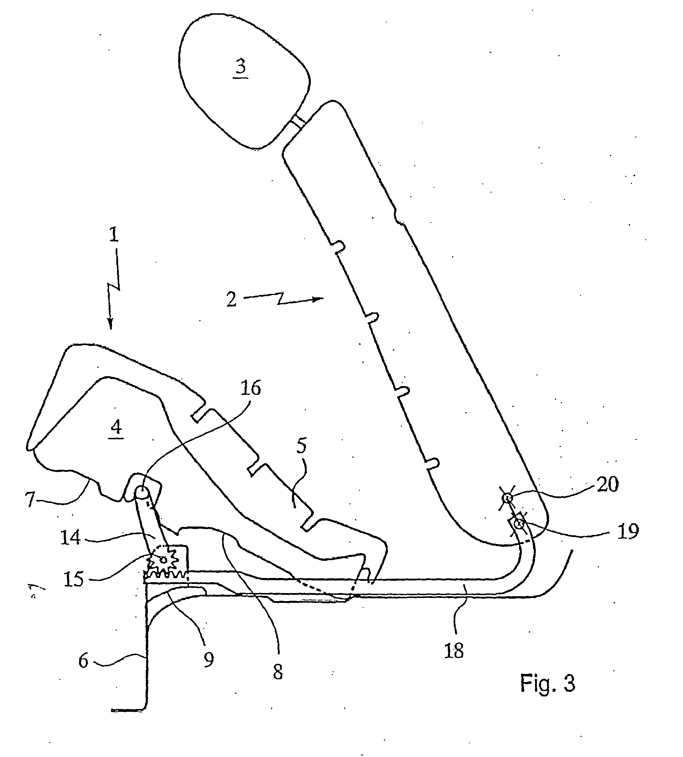

Eine Koppelung der Bewegung von Rückenlehne 2 und Sitzteil 1 wird durch ein J-förmig geformtes Übertragungsgestänge 18 bewirkt, das an der Rückenlehne 2 in einem Gelenk 19 gegenüber der Schwenkachse 20 nach unten versetzt drehbar gelagert ist. Beim Vorklappen der Rückenlehne 2 (Figuren 2 bis 4) wird das Übertragungsgestänge 18 entgegen der Fahrtrichtung nach hinten verschoben. Das vordere Ende des Übertragungsgestänges 18 ist mit einer zahnstangenartigen Verzahnung 21, die mit einer zirkuläre ausgebildeten Gegenverzahnung 22 des Gelenkarms 14 in Eingriff steht und diesen um das Gelenk 15 herum im Raum oberhalb des Fahrzeugbodens 6 nach vorne schwenkt. Dabei wird das Sitzteil 1 im vorderen Bereich durch den Gelenkarm 14 angehoben, wobei die vordere Ausnehmung 7 zuerst gegenüber der Vorwölbung 9 im Wesentlichen nach oben bewegt und sein hinteres, in einer nicht dargestellten Schienenführung verschieblich gelagertes Ende unter der Rückenlehne 2 hervorgezogen werden.

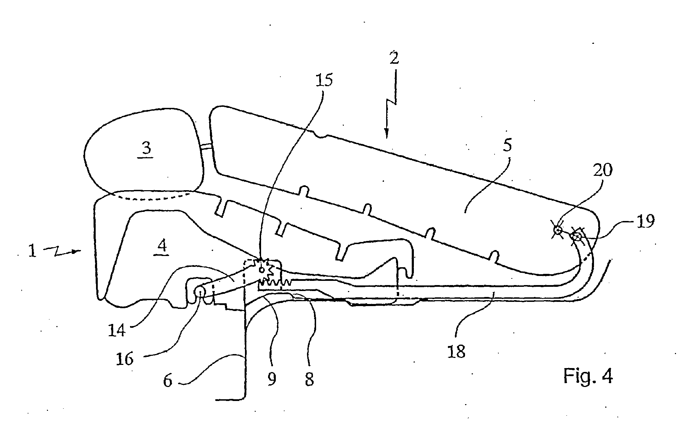

Beim Erreichen der Nichtgebrauchsstellung (Fig. 4) befindet sich das Sitzteil 1 wieder in einer horizontalen Lage, ist also gegenüber der Gebrauchsstellung nach Fig. 1 parallelverlagert worden. Dabei wird die hintere Ausnehmung 8 auf die formschlüssig trägerartige Vorwölbung 9 des Fahrzeugbodens 6 durch ein im letzten Stadium des Bewegungsablaufs im Wesentlichen nach unten gerichtete Relativbewegung aufgesetzt, wobei der Gelenkarm 14 erneut eine horizontale, aber gegenüber der Ausgangsstellung um 180° gedrehte Position einnimmt.

### Bezugszeichen

- 1: Sitzteil
- 2: Rückenlehne
- 3: Kopfstütze
- 4: Hartschaumteil
- 5: Weichschaumauflage
- 6: Fahrzeugboden
- 7,8: Ausnehmung
- 9: Vorwölbung
- 10, 11: Oberfläche
- 12: Sitzbeinhöcker
- 13: Gelenkmechanismus
- 14: Gelenkarm
- 15, 16: Gelenk
- 17: Clipverbindung
- 18: Übertragungsgestänge
- 19: Gelenk
- 20: Schwenkachse
- 21: Verzahnung
- 22: Gegenverzahnung

- G: Gerade

## Patentansprüche

1. Fahrzeugsitz, insbesondere für ein Kraftfahrzeug, mit einem Polsterteil aus einem Hartschaumteil (4) und einer Weichschaumauflage (5), wobei das Polsterteil als Sitzteil (1) ausgebildet ist, **dadurch gekennzeichnet, dass** das Hartschaumteil (4) eine zumindest bereichsweise kongruent zum Fahrzeugboden (6) geformte Oberfläche aufweist, die mit dem Fahrzeugboden (6) in Gebrauchsstellung des Sitzteils (1) in Formschluß bringbar ist, wobei das Sitzteil (1) mittels eines Gelenkmechanismusses (13) aus dem Formschluss lösbar und in eine Nichtgebrauchsstellung verlagerbar ist, das Gewicht des Sitzinsassen durch den Formschluss unmittelbar vom Hartschaumteil (4) in den Fahrzeugboden (6) übertragen wird und der Gelenkmechanismus (13) nur der Bewegungsführung des Sitzteils (1) dient.

2. Fahrzeugsitz nach Anspruch 1, **dadurch gekennzeichnet, dass** das Hartschaumteil (4) aus expandiertem Polypropylen-Partikelschaum (EPP) besteht.

3. Fahrzeugsitz nach einem der Ansprüche 1 oder 2, **dadurch gekennzeichnet, dass** der Formschluß zumindest zwischen einer sich im Wesentlichen quer zur Fahrtrichtung und vertikal erstreckenden Oberfläche (10) des Fahrzeugbodens (6) und einer dazu parallel verlaufenden Oberfläche (11) des Hartschaumteils (4) erzeugbar ist.

4. Fahrzeugsitz nach Anspruch 3, **dadurch gekennzeichnet, dass** die Oberfläche (11, 12) des Fahrzeugbodens (6) Teil einer horizontal und quer zur Fahrtrichtung (Y-Richtung) verlaufenden, trägerartigen Vorwölbung (9) des Fahrzeugbodens (6) und die Oberfläche des Hartschaumteils (4) Teil einer in gleicher Richtung verlaufenden ersten Ausnehmung im Hartschaumteil (4) ist.

5. Fahrzeugsitz nach einem der vorhergehenden Ansprüche, **dadurch gekennzeichnet, dass** der Gelenkmechanismus (13) einen Gelenkarm (14) umfaßt, der an einem Ende gelenkig mit dem Fahrzeugboden (6) und an seinem anderen Ende gelenkig mit dem Hartschaumteil (4) derart verbunden ist, dass das Sitzteil (1) aus seiner Gebrauchsstellung in eine parallelverlagerte Nichtgebrauchsstellung bringbar ist.

6. Fahrzeugsitz nach Anspruch 5, **dadurch gekennzeichnet, dass** beide Gelenke (15, 16) sich in Y-Richtung erstreckende Drehachsen aufweisen, wobei das dem Hartschaumteil (4) zugeordnete Gelenk (16) in Gebrauchsstellung des Sitzteils (1) gegenüber dem dem Fahrzeugboden (6) zugeordneten Gelenk (15) entgegen der Fahrtrichtung (X-Richtung) nach hinten versetzt ist.

7. Fahrzeugsitz nach Anspruch 5 oder 6, **dadurch gekennzeichnet, dass** das dem Hartschaumteil (4) zugeordnete Gelenk (16) in diesem bei der Montage des Sitzteils (1) verrastbar ist.

8. Fahrzeugsitz nach einem der Ansprüche 5 bis 7, **dadurch gekennzeichnet, dass** das Sitzteil (1) in Nichtgebrauchsstellung mittels einer zweiten Ausnehmung im Hartschaumteil (4) mit der Aufwölbung (9) des Fahrzeugbodens (6) in Formschluss bringbar ist.

9. Fahrzeugsitz nach einem der vorhergehenden Ansprüche, **dadurch gekennzeichnet, dass** die Oberseite des Hartschaumteils (4) nach hinten abfallend rampenförmig ausgebildet ist.

10. Fahrzeugsitz nach Anspruch 9, **dadurch gekennzeichnet, dass** eine zwischen der Oberfläche der ersten Ausnehmung und dem Sitzbeinhöcker (12) des Sitzinsassen verlaufende virtuelle Gerade (G) um einen Winkel von 25° bis 35°, bevorzugt etwa 30° gegenüber der Horizontalen geneigt ist.

11. Fahrzeugsitz, insbesondere nach einem der Ansprüche 5 bis 10, **dadurch gekennzeichnet, dass** das Sitzteil (1) mit einer schwenkbar gelagerten Rückenlehne (2) des Fahrzeugsitzes derart in Wirkzusammenhang steht, dass das Sitzteil (1) beim Vorklappen der Rückenlehne (2) aus der aufrechten Gebrauchsstellung in eine Nichtgebrauchsstellung seinerseits von der Gebrauchs- in die Nichtgebrauchsstellung verlagert wird.

12. Fahrzeugsitz nach Anspruch 11, **dadurch gekennzeichnet, dass** die Rückenlehne (2) drehbar mit einem versetzt zu ihrer Schwenkachse (20) angeordneten Übertragungsgestänge (18) verbunden ist, mittels dessen eine Drehung des Gelenkarms (14) herbeiführbar ist.

13. Fahrzeugsitz nach Anspruch 12, **dadurch gekennzeichnet, dass** das Übertragungsgestänge (18) an seinem dem Gelenkarm (14) zugeordnetem Ende mit einer zahnstangenartigen Verzahnung (21) ausgestattet ist, die in Verbindung mit einer am Gelenkarm (14) ausgeformten, zirkulären Gegenverzahnung (22) zur Erzeugung eines Drehmoments um eines seiner Gelenke (15, 16) geeignet ist.

14. Fahrzeugsitz nach Anspruch 13, **dadurch gekennzeichnet, dass** die Gegenverzahnung (22) im Bereich des dem Fahrzeugboden (6) zugeordneten Gelenks (15) des Gelenkarms (14) ausgebildet ist.

## Claims

1. Vehicle seat, especially for a motor vehicle, with an upholstery part made of a hard foam part (4) and a soft foam pad (5), the upholstery part being designed as a seat part (1), **characterized in that** the hard foam part (4) has a surface which, at least in some regions, is shaped congruently to the vehicle floor (6) and, in the use position of the seat part (1), can be brought into a positive fit with the vehicle floor (6), the seat part (1) being releasable from the positive fit and being shiftable into a not-in-use position by means of a hinge mechanism (13), the weight of the seat occupant being transmitted by the positive fit directly from the hard foam part (4) into the vehicle floor (6) and the hinge mechanism (13) serving only to guide the movement of the seat part (1).

2. Vehicle seat according to Claim 1, **characterized in that** the hard foam part (4) is composed of expanded polypropylene particle foam (EPP).

3. Vehicle seat according to either of Claims 1 and 2, **characterized in that** the positive fit can be produced at least between a surface (10) of the vehicle floor (6), which surface extends essentially transversely with respect to the driving direction and vertically, and a surface (11), which runs parallel thereto, of the hard foam part (4).

4. Vehicle seat according to Claim 3, **characterized in that** the surface (11, 12) of the vehicle floor (6) is part of a support-like forward arching (9) of the vehicle floor (6), said forward arching running horizontally and transversely with respect to the direction of travel (Y direction), and the surface of the hard foam part (4) is part of a first recess, which runs in the same direction, in the hard foam part (4).

5. Vehicle seat according to one of the preceding claims, **characterized in that** the hinge mechanism (13) comprises a hinge arm (14) which is connected at one end in an articulated manner to the vehicle floor (6) and is connected at its other end in an articulated manner to the hard foam part (4) in such a manner that the seat part (1) can be brought out of its use position into a not-in-use position shifted parallel thereto.

6. Vehicle seat according to Claim 5, **characterized in that** both hinges (15, 16) have axes of rotation extending in the Y direction, with the hinge (16) assigned to the hard foam part (4), in the use position of the seat part (1), being offset rearward counter to the direction of travel (X direction) in relation to the hinge (15) assigned to the vehicle floor (6).

7. Vehicle seat according to Claim 5 or 6, **characterized in that** the hinge (16) assigned to the hard foam part (4) can be latched therein during installation of the seat part (1).

8. Vehicle seat according to one of Claims 5 to 7, **characterized in that**, in the not-in-use position, the seat part (1) can be brought into a positive fit with the arching (9) of the vehicle floor (6) by means of a second recess in the hard foam part (4).

9. Vehicle seat according to one of the preceding claims, **characterized in that** the upper side of the hard foam part (4) is designed such that it drops rearward in the form of a ramp.

10. Vehicle seat according to Claim 9, **characterized in that** a virtual straight line (G) running between the surface of the first recess and the ischial tuberosity (12) of the seat occupant is inclined by an angle of 25° to 35°, preferably approximately 30°, with respect to the horizontal.

11. Vehicle seat, in particular according to one of Claims 5 to 10, **characterized in that** the seat part (1) is operatively connected to a pivotably mounted backrest (2) of the vehicle seat in such a manner that, when the backrest (2) is folded forward from the upright use position into a not-in-use position, the seat part (1), for its part, is shifted from the use position into the not-in-use position.

12. Vehicle seat according to Claim 11, **characterized in that** the backrest (2) is connected rotatably to a transmission linkage (18) which is arranged offset with respect to the pivot axis (20) of said backrest and by means of which a rotation of the hinge arm (14) can be brought about.

13. Vehicle seat according to Claim 12, **characterized in that** the transmission linkage (18) is equipped at its end assigned to the hinge arm (14) with a rack-like toothing (21) which is suitable, in conjunction with a circular mating toothing (22) formed on the hinge arm (14), for producing a torque about one of its hinges (15, 16).

14. Vehicle seat according to Claim 13, **characterized in that** the mating toothing (22) is formed in the region of that hinge (15) of the hinge arm (14) which is assigned to the vehicle floor (6).

## Revendications

1. Siège de véhicule, en particulier pour un véhicule automobile, comprenant une partie de rembourrage en une partie en mousse dure (4) et un revêtement en mousse souple (5), la partie de rembourrage étant réalisée sous forme de partie d'assise (1), **caractérisé en ce que** la partie en mousse dure (4) présente une surface formée au moins en partie de manière à coïncider avec le sol du véhicule (6), laquelle peut être amenée en engagement par coopération de forme avec le sol du véhicule (6) dans la position d'utilisation de la partie d'assise (1), la partie d'assise (1) pouvant être séparée de l'engagement par coopération de forme au moyen d'un mécanisme d'articulation (13) et pouvant être déplacée dans une position de non utilisation, le poids de l'occupant du siège étant transféré directement par l'engagement par coopération de forme de la partie en mousse dure (4) au sol du véhicule (6), et le mécanisme d'articulation (13) ne servant qu'à guider le mouvement de la partie d'assise (1).

2. Siège de véhicule selon la revendication 1, **caractérisé en ce que** la partie en mousse dure (4) se compose de mousse de particules de polypropylène expansé (PPE).

3. Siège de véhicule selon l'une quelconque des revendications 1 ou 2, **caractérisé en ce que** l'engagement par coopération de forme peut être réalisé au moins entre une surface (10) du sol du véhicule (6) s'étendant essentiellement transversalement à la direction de conduite et verticalement, et une surface (11) de la partie en mousse dure (4) s'étendant parallèlement à celle-ci.

4. Siège de véhicule selon la revendication 3, **caractérisé en ce que** la surface (11, 12) du sol du véhicule (6) fait partie d'un pré-cintrage (9) du sol du véhicule (6) de type support, s'étendant horizontalement et transversalement à la direction de conduite (direction Y), et la surface de la partie en mousse dure (4) fait partie d'un premier évidement dans la partie en mousse dure (4), s'étendant dans la même direction.

5. Siège de véhicule selon l'une quelconque des revendications précédentes, **caractérisé en ce que** le mécanisme d'articulation (13) comprend un bras articulé (14) qui est connecté à une extrémité de manière articulée au sol du véhicule (6) et à son autre extrémité de manière articulée à la partie en mousse dure (4), de telle sorte que la partie d'assise (1) puisse être amenée de sa position d'utilisation dans une position de non utilisation déplacée parallèlement.

6. Siège de véhicule selon la revendication 5, **caractérisé en ce que** les deux articulations (15, 16) présentent des axes de rotation s'étendant dans la direction Y, l'articulation (16) associée à la partie en mousse dure (4) étant décalée vers l'arrière dans le sens inverse de la direction de conduite (direction X) dans la position d'utilisation de la partie d'assise (1) par rapport à l'articulation (15) associée au sol du véhicule (6).

7. Siège de véhicule selon la revendication 5 ou 6, **caractérisé en ce que** l'articulation (16) associée à la partie en mousse dure (4) peut être encliquetée dans celle-ci lors du montage de la partie d'assise (1).

8. Siège de véhicule selon l'une quelconque des revendications 5 à 7, **caractérisé en ce que** la partie d'assise (1) dans la position de non utilisation peut être amenée, au moyen d'un deuxième évidement dans la partie en mousse dure (4), en engagement par coopération de forme avec le bombement (9) du sol du véhicule (6).

9. Siège de véhicule selon l'une quelconque des revendications précédentes, **caractérisé en ce que** le côté supérieur de la partie en mousse dure (4) est réalisé sous forme de rampe descendant vers l'arrière.

10. Siège de véhicule selon la revendication 9, **caractérisé en ce qu'**une droite virtuelle (G) s'étendant entre la surface du premier évidement et la tubérosité ischiatique (12) de l'occupant du siège est inclinée d'un angle de 25° à 35°, de préférence d'environ 30°, par rapport à l'horizontale.

11. Siège de véhicule, en particulier selon l'une quelconque des revendications 5 à 10, **caractérisé en ce que** la partie d'assise (1) est en relation fonctionnelle avec un dossier (2) du siège du véhicule monté de manière pivotante, de telle sorte que la partie d'assise (1), lors du rabattement vers l'avant du dossier (2) de la position d'utilisation debout dans une position de non utilisation, soit déplacée à son tour de la position d'utilisation dans la position de non utilisation.

12. Siège de véhicule selon la revendication 11, **caractérisé en ce que** le dossier (2) est connecté de manière rotative à une tringle de transfert (18) disposée de manière décalée par rapport à son axe de pivotement (20), au moyen de laquelle une rotation du bras articulé (14) peut être provoquée.

13. Siège de véhicule selon la revendication 12, **caractérisé en ce que** la tringle de transfert (18) est munie, sur son extrémité associée au bras articulé (14), d'une denture (21) de type crémaillère, qui en liaison avec une denture conjuguée (22) circulaire, formée sur le bras articulé (14), est appropriée pour produire un couple autour de l'une de ses articulations (15, 16).

14. Siège de véhicule selon la revendication 13, **caractérisé en ce que** la denture conjuguée (22) est réalisée dans la région de l'articulation (15) du bras articulé (14) associée au sol du véhicule (6).
